(19) Europäisches Patentamt
European Patent Office
Office européen des brevets

(11) **EP 2 112 544 B1**

(12) **EUROPÄISCHE PATENTSCHRIFT**

(45) Veröffentlichungstag und Bekanntmachung des Hinweises auf die Patenterteilung:
**16.11.2011 Patentblatt 2011/46**

(21) Anmeldenummer: **09004924.8**

(22) Anmeldetag: **02.04.2009**

(51) Int Cl.:
*G02B 26/02* (2006.01)  *G09F 9/37* (2006.01)

(54) **Fluidische Anzeigevorrichtung mit pixelintegrierter Rückführung des Fluids**

Fluidic display with pixel-integrated recirculation of the fluid

Dispositif d'affichage à fluide avec récupération du fluide intégrée dans le pixel

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.04.2008 DE 102008020131**

(43) Veröffentlichungstag der Anmeldung:
**28.10.2009 Patentblatt 2009/44**

(73) Patentinhaber: **advanced display technology AG**
**99050 Appenzell (CH)**

(72) Erfinder:
• **Bartels, Frank**
**45527 Hattingen (DE)**
• **Bitman, Andriy**
**44147 Dortmund (DE)**
• **Jerosch, Dieter**
**65812 Bad Soden (DE)**

(74) Vertreter: **Tönhardt, Marion**
**Forrester & Boehmert**
**Pettenkoferstrasse 20-22**
**80336 München (DE)**

(56) Entgegenhaltungen:
**US-A1- 2005 249 641    US-A1- 2007 025 875**

• **KARLHEINZ BLANKENBACH ET AL.: "P-111: Novel Electrowetting Displays" SID SYMPOSIUM DIGEST OF TECHNICAL PAPERS, Bd. 38, Nr. 1, Mai 2007 (2007-05), Seiten 618-621, XP002533545**

## Beschreibung

### Gebiet der Erfindung

Die Erfindung betrifft allgemein das Gebiet der Anzeigeinstrumente, und hier das Untergebiet der so genannten Displays, also Anzeigen, die Bilder oder Informationen darstellen, die im Normalfall aus einer Mehrzahl von einzelnen Bildpunkten (Pixeln) zusammengesetzt sind, und bei denen in ausreichender Entfernung zum Display die einzelnen Bildpunkte optisch zu einem Gesamtbild verschmelzen. Speziell betrifft die Erfindung dabei solche Displays, bei welchen die Darstellung auf der Verwendung von Flüssigkeiten beruht, so genannte fluidische Displays.

Konkret betrifft die Erfindung eine Vorrichtung zum pixelintegrierten Rückführen von Flüssigkeit im Bildpunkt eines fluidischen Displays, welche dadurch gekennzeichnet ist, dass die Flüssigkeit, mit welcher die gewünschte Information dargestellt werden soll, und/oder das Trägerfluid, in welches sie ggf. eingebettet ist, besonders Platz sparend und für einen Betrachter unsichtbar am sichtbaren Teil eines Bildpunktes (Bild-Kompartiment) vorbei in ein Reservoir (Reservoir-Kompartiment) über- bzw. aus diesem zurückgeführt werden kann.

### Stand der Technik und Nachteile

Bekannt sind aus dem Stand der Technik Anzeigeinstrumente, die zur Darstellung von Bildern oder Informationen gefärbte, beispielsweise schwarze Flüssigkeiten nutzen, die je nach Zustand des jeweiligen Bildpunktes sichtbar, also "angeschaltet", oder unsichtbar, also "ausgeschaltet" sind. Zum Schalten des Bildpunktes kommen unterschiedliche Technologien zum Einsatz. Gemeinsam ist allen Technologien, dass die gefärbte Flüssigkeit die Zustände "sichtbar" und "unsichtbar" einnehmen können muss. Zum Wechseln von "an" nach "aus" kann die Flüssigkeit entweder ihre Farbe bzw. ihren Kontrast ändern oder aus dem Sichtfeld eines Betrachters verschwinden. Dieser Prozess muss auch reversibel sein, um zurück in den Zustand "an" wechseln zu können.

Für den Fall des Verschwindens der Flüssigkeit aus dem Betrachtersichtfeld muss diese bewegt werden. Hierfür sind aus dem Stand der Technik wiederum verschiedene Technologien bekannt. Besonders bevorzugt sind hier Pumpen oder der Effekt der Elektrobenetzung (eng. electrowetting) zu nennen. Zumeist ist die gefärbte Flüssigkeit in ein weiteres Trägerfluid eingebettet, mit welchem sie nicht mischbar ist, so dass sich ein Zweiphasengemisch herausbildet. Es sind dabei sowohl Vorrichtungen bekannt, bei denen das Trägerfluid eine Flüssigkeit wie zum Beispiel Öl ist, als auch solche Vorrichtungen, bei welchen sich die gefärbte Flüssigkeit in einem gasförmigen Trägerfluid wie zum Beispiel in Luft oder einem Schutzgas befindet.

Die gefärbte Flüssigkeit befindet sich zunächst in einem entsprechenden dafür vorgesehenen Raum, dessen Inhalt für einen Betrachter sichtbar ist. Dieser Raum wird im Folgenden auch Bildkompartiment genannt. Für die Verschiebung der gefärbten Flüssigkeit aus dem Betrachtersichtfeld heraus muss ausreichend Raum vorgesehen sein, um die Flüssigkeit vorübergehend, nämlich bis zum erneuten Wechsel des Schaltzustandes des Bildpunktes auf "an", aufzunehmen. Dies wird im Normalfall durch ein entsprechend dimensioniertes Reservoir erreicht, das sich außerhalb des Betrachtersichtfeldes befindet. Um in dieses Reservoir, welches im Folgenden auch Reservoirkompartiment genannt wird, zu gelangen, ist außerdem ein entsprechender Verbindungskanal vorzusehen, der den Bildpunkt bzw. das Bildkompartiment mit dem Reservoir bzw. dem Reservoirkompartiment verbindet. Der Verbindungskanal kann dabei sowohl ohne als auch mit Verjüngung ausgebildet sein. Erfolgt der Transport der Flüssigkeit mittels eines unidirektional arbeitenden Mittels wie z.B. einer Ein-Wege-Pumpe, so muss die gefärbte Flüssigkeit und ggf. das Trägerfluid in einem Kreislauf förderbar ein, wenn sie nicht nur ein einziges Mal in das Betrachterblickfeld hinein- und wieder herausgeführt werden soll. Durch den rotierenden Wechsel von gefärbter Flüssigkeit und (un-)gefärbtem Trägerfluid wird der Bildpunkt an- bzw. abgeschaltet. In diesem Zusammenhang kann von dem Verbindungskanal auch als einem Rückführkanal gesprochen werden, da die Flüssigkeit(en) bzw. Fluide durch diesen im Kreis zu dem Bildpunkt, also in das Bildkompartiment, zurückgeführte werden.

Hierbei stellt sich das Problem, dass für den genannten Rückführkanal seinerseits ausreichend Raum bereitzustellen ist. Mindestens muss der Rückführkanal zusammen mit dem Reservoir dabei so bemessen sein, dass beide gemeinsam die gefärbte Flüssigkeit vollständig aufnehmen können, so dass diese auch vollständig aus dem Betrachtersichtfeld bzw. dem Bild-Kompartiment verschwinden kann.

Im Falle eines ebenen Aufbaus, bei dem also nicht in die Tiefe gearbeitet werden kann um so die dritte Dimension auszunutzen, ergibt sich hieraus zwangsläufig, dass Reservoirkompartiment und Rückführkanal gemeinsam mindestens ebenso viel Fläche verbrauchen wie der eigentliche (sichtbare) Bildpunkt bzw. das Bildkompartiment. Ein unbefriedigendes Verhältnis zwischen aktiver (also optisch schaltbarer) und inaktiver (also optisch unveränderbarer) Fläche ist die Folge. Hieraus resultieren ein schlechter Kontrast und eine verbesserungswürdige Auflösung (Anzahl der Bildpunkte pro Flächeneinheit) .

Um dem Problem des hohen Flächenverbrauchs zu begegnen, ist es wünschenswert, die gefärbte Flüssigkeit und ggf. das Trägerfluid in ein- und demselben Kanal zu transportieren, wobei dafür Sorge getragen werden muss, dass sich die beiden Fluide nicht miteinander vermischen. Ein derartiger Ansatz wird beispielsweise in L. Riegger et al. : "MICROFLUIDICS ON A CONVENTIONAL, 10-$ CDROM DRTVE: ALL-IN-ONE DETERMINATION OF THE HEMATOCRITn; The 10th International Conference on Miniaturized Systems for Chemistry and Life Sciences (µTAS2006), November 5-9, 2006, Tokyo, Japan, offenbart. Die Autoren nutzen einen Blindkanal mit einem abgerundeten Ende, der aufgrund einer bestimmten Formgebung Flüssigkeit, welche an einer Kante im Öffnungsbereich des Kanals eingegeben wird, mit Hilfe des Kapillareffektes zunächst an einer Wand des Kanals in Richtung des geschlossenen Ende zieht, wobei die Flüssigkeit anschließend an der gegenüberliegenden Wand wieder zurückfließt, und erst nach nahezu vollständiger Wandbenetzung auch das im Kanalinnern verbliebene Gas in Richtung des Ausgangs herauedrängt. Hintergrund der Vorrichtung ist der wunsch, einen derartigen Blindkanal blasenfrei befüllen zu können. Durch geschickte Ausnutzung des Kapillareffekts ist es so vorübergehend möglich, zwei parallel aneinander vorbei fließende Flüssigkeitspfade in einem einzigen Kanalvolumen zu erhalten, ohne dass hierfür Trennwände oder dergleichen notwendig sind. Allerdings ist die Formgebung des Kanals so gewählt, dass der Kanal schließlich vollständig von der Flüssigkeit ausgefüllt wird, wobei sich die Flüssigkeitsfronten berühren und schließlich miteinander verschmelzen; dies ist im Hinblick auf das vorliegende Problem jedoch nicht erwünscht, da die Trennung von farbiger Flüssigkeit und Trägerfluid jederzeit erhalten bleiben muss.

Aus K. Blankenbach et al.: "D-111: Novel Electrowetting Display" SID Symposium Digest of Technical Papers, Bd. 38, Nr. 1, Mai 2007 (2007 - 05), Seiten 618 - 621 ist ein elektrowettingbasiertes Anzeigedisplay bekannt, bei dem eine gefärbte Flüssigkeit zwischen einem einsehbaren und einem nichteinsehbaren Kompartiment bin- und herbewegt werden kann. Desweiteren ist eine fluidische Kette offenbart, bei der mehrere einsehbare und nichteinsehbare Kompartimente über Verbirrdungskauääle in Reihe miteinander verbunden sind.

Aus der US 2005/249641 A sowie der US 2007/025875 A1 sind jeweils Vorrichtungen für den unidirektionalen Flüssigkeitstransport bekannt, bei denen Übergangsstnikturen zwischen Kanälen und Volumina zur Aufnahme einer Flüssigkeit vorgesehen sind, infolge welcher kapillare Sprünge ausgebildet werden, die den Flüssigkeitstransport und insbesondere die Flüssigkeitstransportrichtung in gewünschter Weise limitieren.

## Aufgabe der Erfindung und Lösung

Die Aufgabe der Erfindung ist demnach die Bereitstellung einer Vorrichtung, mit der die Flüssigkeit, mit welcher die gewünschte Information dargestellt werden soll, und/oder das Trägerfluid, in welches sie ggf. eingebettet ist, besonders Platz sparend und für einen Betrachter unsichtbar am sichtbaren Teil eines Bildpunktes bzw. dem Bildkompartiment eines fluidischen Displays vorbei in ein Reservoirkompartiment über- bzw. aus diesem in das Bildkompartiment zurückgeführt werden kann.

Die Aufgabe wird durch die in Anspruch 1 vorgeschlagene Vorrichtung gelöst. Dementsprechend wird eine Vorrichtung zum Platz sparenden Rückführen einer gefärbten Flüssigkeit und/oder eines Trägerfluids in einen Bildpunkt innerhalb eines fluidischen Displays vorgeschlagen, welches ein Bildkompartiment, ein Reservoirkompartiment, einen Verbindungskanal und mindestens einen Rückführkanal umfasst, wobei der mindestens eine Rückführkanal dadurch gebildet wird, dass der Verbindungskanal mindestens einen Bereich mit einem durchgehend vergrößerten Querschnitt aufweist, der in bestimmter Weise in den Querschnitt des ursprünglichen Querschnitts übergeht.

Weitere bevorzugte Ausführungsformen sind den abhängigen Ansprüchen sowie der nachfolgenden detaillierten Beschreibung und den Figuren zu entnehmen.

## Beschreibung

Die Erfindung dient der Bereitstellung einer Vorrichtung, mit der eine gefärbte Flüssigkeit, mit welcher die gewünschte Information dargestellt werden soll, und/oder ein Trägerfluid, in welches sie ggf. eingebettet ist, besonders Platz sparend und für einen Betrachter unsichtbar am sichtbaren Teil eines Bildpunktes bzw. dem Bildkompartiment eines fluidischen Displays vorbei in ein Reservoirkompartiment über- bzw. aus diesem in das Bildkompartiment zurückgeführt werden kann.

Die Erfindung basiert dabei auf dem Effekt der Kapillarität, der das Verhalten von Flüssigkeiten beschreibt, das sie bei Kontakt mit Kapillaren, z.B. engen Röhren, Spalten oder Hohlräumen, zeigen. Diese Effekte werden durch die Oberflächenspannung der Flüssigkeit selbst und die der Grenzflächenspannung zwischen Flüssigkeit und der festen Oberfläche hervorgerufen. Im Allgemeinen wird sich eine Flüssigkeit auf dem Material des Kapillargefäßes auszubreiten versuchen (Kapillaraszension). Dieses Verhalten ist auf die Adhäsionskraft, also die Kraft, die zwischen zwei Stoffen wirkt, zurückzuführen. Beim bekannten Experiment, in welchem Wasser in einer Glaskapillare, also einem Rohr geringen Durchmessers, entgegen der Schwerkraft aufsteigt, lässt sich die Steighöhe h als Funktion

$$h = \frac{2\sigma \cdot \cos\theta}{\rho \cdot g \cdot r}$$

berechnen. Hierbei ist σ die Oberflächenspannung, θ der Kontaktwinkel, ρ die Dichte der Flüssigkeit, g die Beschleunigung durch die Schwerkraft und r der Radius der Kapillarröhre.

Der Kapillareffekt ist jedoch nicht nur in Röhren, sondern auch an mehr oder minder scharfen Kanten zu beobachten. Beispielsweise wird Flüssigkeit auch dann entgegen der Schwerkraft angesogen, wenn die Kapillare ein offenes, U- oder L-förmiges Profil besitzt. Je spitzer der vom Querschnittsprofil eingeschlossene Winkel, desto höher die Kapillarkraft und desto größer die Steighöhe. Im Falle eines U-förmigen Profils lässt sich auch ein weiterer, technisch relevanter Fall beschreiben, der sich dann ergibt, wenn die beiden parallel zueinander verlaufenden Flächen des U-Profils einen genügend geringen Abstand zueinander besitzen. In diesem Falle wird die Kapillarkraft bzw. der von der Fläche unabhängige Kapillardruck praktisch ausschließlich vom Abstand der beiden parallelen Flächen bestimmt. Nennenswerte Kapillarkräfte ergeben sich dabei erst bei Abständen von wenigen Millimetern; im Mikrometerbereich können die Kräfte so stark anwachsen, dass Platten mit einer dünnen flüssigen Zwischenschicht nahezu untrennbar miteinander verbunden werde. In diesen Fällen wird das zu einer leichteren Trennung führende Abdampfen der Flüssigkeit aus den seitlichen Spalten aufgrund deren Schmalheit zusätzlich erschwert.

Der umgekehrte Effekt stellt sich dann ein, wenn Flüssigkeit, die zunächst entlang einer im Wesentlichen ebenen Fläche entlangkriechen kann, an eine Stufe oder einen Knick dieser Fläche gelangt, die bzw. der einen bestimmten Winkel aufweist. Sofern man den Winkel auf der von der Flüssigkeit benetzten Seite misst, so entspricht ein Winkel von genau 180 Grad einer ebenen Fläche, und ein Winkel von mehr als 180 Grad einer besagten Stufe bzw. einem besagten Knick. Dieser Winkel kann dann definitionsgemäß bis zu 360 Grad betragen; dies entspräche praktisch einer kompletten Richtungsumkehr durch eine Benetzung der Rückseite der Flächen. Ein technisches Beispiel ist das Ende eines Kapillarrohrs, welches eine geringere Länge als die Steighöhe der in ihm befindlichen Flüssigkeit besitzt. Aufgrund des so genannten "kapillaren Sprungs", der beim Verlassen der gleichförmig verlaufenden und dann abrupt endenden Innenseite des Rohres auftritt, kann es der Flüssigkeit in Abhängigkeit der weiteren, oben beschriebenen Parameter unmöglich werden, diesen Sprung zu überwinden. Die Flüssigkeit bleibt gewissermaßen in der Kapillare "gefangen", wölbt sich zwar etwas über das Kapillarende hinaus, benetzt jedoch nicht dessen Außenseite.

Die vorliegende Erfindung nutzt insbesondere den Effekt des kapillaren Sprungs, welcher eine in einem Kanal vorhandene Flüssigkeit davon abhält, bestimmte, für die Flüssigkeit vorgesehene Bereiche zu verlassen. Zusätzlich nutzt die vorliegende Erfindung auch den Effekt der Kapillaraszension, welcher dafür sorgt, die in einem Kanal vorhandene Flüssigkeit bevorzugt an bestimmten, für sie vorgesehenen Bereichen zu halten.

Erfindungsgemäß wird hierzu wird ein so genannter Rückführkanal eingesetzt, der kongruent mit dem Verbindungskanal ausgestaltet ist, welcher das Bild- mit dem Reservoirkompartiment verbindet, wobei der Rückführkanal jedoch einen zumindest teilweise vom Verbindungskanal unterschiedlichen Querschnitt aufweist. Der Unterschied im Querschnitt muss dabei dazu geeignet sein, eine "kapillare Barriere" zu bilden, die dazu führt, dass Flüssigkeit, welche sich in den Gebieten des Querschnitts des Verbindungskanals befindet, diese Gebiete nicht verlassen kann, da die am Querschnittsübergang wirkenden Kapillarkräfte im Verhältnis zu den Kapillarkräften, die sie im entsprechenden Kanal halten, deutlich kleiner sind ("kapillarer Sprung").

Die Erfindung wird in Form einer Vorrichtung bereitgestellt, welche dem Platz sparenden Rückführen einer gefärbten Flüssigkeit und/oder eines Trägerfluids in einen Bildpunkt innerhalb eines fluidischen Displays dient. Die Vorrichtung umfasst dabei

- ein Bildkompartiment, in welchem die gefärbte Flüssigkeit teilweise oder ganz aufnehmbar ist und dessen Inhalt für einen Betrachter sichtbar ist;

- ein Reservoirkompartiment, in welchem die gefärbte Flüssigkeit teilweise oder ganz aufnehmbar ist und dessen Inhalt für einen Betrachter nicht sichtbar ist;

- einen Verbindungskanal, der das Bildkompartiment und das Reservoirkompartiment fluidisch miteinander verbindet,

- mindestens einen Rückführkanal, welcher das Bildkompartiment und das Reservoirkompartiment fluidisch miteinander verbindet.

Das Bildkompartiment ist dabei derjenige Teil der Vorrichtung, welcher der eigentlichen Anzeige der Information dient. Die Information kann in der Darstellung eines einzelnen Bildpunktes, der beispielsweise rund oder quadratisch ist, bestehen. Das Bildkompartiment kann aber auch eine andere Form besitzen, die eine höhergradige Information darzustellen in der Lage ist, wie zum Beispiel ein Symbol oder dergleichen, welches erst mittels Aufnahme der gefärbten Flüssigkeit für einen Betrachter sichtbar ist, oder welches durch Aufnahme der gefärbten Flüssigkeit unsichtbar wird (beispielsweise aufgrund einer Identität von Flüssigkeitsfarbe und der Farbe des sie umgebenden Materials).

Das Reservoirkompartiment dient erfindungsgemäß der Aufnahme der gefärbten Flüssigkeit bzw. eines so großen Anteils derselben, dass nach Befüllung des Reservoirkompartiments das Bildkompartiment als im Wesentlichen "leer" angesehen werden kann. Die Form des Reservoirkompartiments ist dabei in weiten Bereichen frei wählbar, kann aber bevorzugt die gleiche Tiefe wie das Bildkompartiment aufweisen, wobei "Tiefe" den lichten Abstand derjenigen Flächen zueinander bezeichnet, die senkrecht aus der Sichtrichtung eines Betrachters ("Haupt-Betrachtungsrichtung") liegen.

Der Verbindungskanal erfüllt die Aufgabe, das Bildkompartiment und das Reservoirkompartiment fluidisch miteinander zu verbinden. Die Ausrichtung und Form des Verbindungskanals ist im Wesentlichen frei wählbar; bevorzugt sind jedoch solche Ausrichtungen und Formen, welche sich besonders Platz sparend verwirklichen lassen. Insbesondere ist es bevorzugt, dass die Tiefe des Verbindungskanals im Wesentlichen der Tiefe des bzw. der Kompartimente entspricht, wobei auch hier die weiter oben dargelegte Definition der Tiefe Gültigkeit besitzt.

Der mindestens eine Rückführkanal verbindet das Bildkompartiment fluidisch mit dem Reservoirkompartiment. Die Lage und die Form des Rückführkanals sind, im Gegensatz zum Verbindungskanal, nicht mehr frei wählbar, sondern müssen erfindungsgemäß bestimmte Anforderungen erfüllen.

Dementsprechend ist es erfindungsgemäß vorgesehen, dass der mindestens eine Rückführkanal dadurch gebildet wird, dass der Verbindungskanal mindestens einen Bereich mit einem durchgehend vergrößerten Querschnitt aufweist. Mit anderen Worten, der Rückführkanal ist in gewisser Weise Teil des Verbindungskanals, unterscheidet sich von diesem jedoch durch einen größeren Querschnitt. Es existiert dementsprechend ein "Hauptkanal", an welchen mindestens ein "Nebenkanal" angrenzt, und mit welchem dieser jeweils mindestens eine Wand gemeinsam hat, so dass ebendiese Wand lediglich gedacht, nicht jedoch wirklich ausgeführt und materiell vorhanden ist. Es ist dabei zunächst unerheblich, an welcher Stelle des Querschnitts des Verbindungskanals sich dieser größere Querschnitt, durch welchen der Rückführkanal gebildet wird, befindet. Ebenso ist es zunächst unerheblich, ob es lediglich einen oder mehrere derartige Querschnittsvergrößerungen gibt, sofern die Unterscheidbarkeit der beiden Querschnitte gewahrt bleibt. Durch die Schaffung eines Bereichs vergrößerten Querschnitts wird der oben beschriebene Effekt der Kapillaraszension bzw. des kapillaren Sprungs ausgenutzt, so dass sich Flüssigkeit, die sich in dem "engen" Bereich des Kanalvolumens befindet, der erfindungsgemäß dem Rückführkanal entspricht, nicht in den "weiten" Bereich gelangen kann, welcher erfindungsgemäß dem Verbindungskanal entspricht.

"Durchgehend" vergrößert meint dabei nicht, dass die Vergrößerung über die gesamte Länge des Verbindungs- bzw. Rückführkanals gleicht bleibt; vielmehr kann es durchaus möglich sein, dass beispielsweise die Lage oder auch die konkrete Größe der Querschnittsveränderung entlang des Strömungspfades variieren. Entscheidend ist lediglich, dass die Querschnittsveränderung kann keiner Stelle so gering ausfällt, dass sich wiederum ein kapillarer Sprung bildet und/oder die Kapillaraszension so weit herabgesetzt wird, so dass die erfindungsgemäße Funktionalität unterbrochen wird.

Nach einer bevorzugten Ausführungsform der erfindungsgemäßen Vorrichtung ist der Übergang des Querschnitts des Verbindungskanals in den Bereich vergrößerten Querschnitts im Wesentlichen scharfkantig ausgeführt. Das bedeutet, dass auf Abrundungen, deren Radien in der gleichen oder gar höheren Größenordnung wie die Geometrien des Querschnitts liegen, zu verzichten ist. Derartige Abrundungen können unter Umständen dazu führen, dass der kapillare Sprung nicht mehr groß genug ausfällt, bzw. dass die Kapillaraszension nicht ausreicht, um die räumliche Trennung der beiden Fluide (gefärbte Flüssigkeit und Trägerfluid) zu gewährleisten.

Nach einer weiteren bevorzugten Ausführungsform ist der Übergang des Bereichs ursprünglichen Querschnitts in den Bereich vergrößerten Querschnitts an einer oder mehreren Kanten lediglich leicht abgerundet ausgestaltet. Leicht abgerundet bedeutet, dass der Radius der Abrundung in etwa eine Größenordnung geringer ausfällt als die Differenz des Bereichs vergrößerten Querschnitts und des Bereichs ursprünglichen Querschnitts. Besitzt der Bereich vergrößerten Querschnitts beispielsweise eine Breite von 10 mm und der Bereich ursprünglichen Querschnitts von 6 mm, so beträgt die Differenz 4 mm, und eine Abrundung, die ungefähr eine Größenordnung geringer ausfällt, hätte demnach einen Radius von circa 0,4 mm.

Nach einer besonders bevorzugten Ausführungsform ist der Querschnittsübergang im Wesentlichen als rechter Winkel ausgebildet. Dementsprechend hat sowohl der Verbindungskanal als auch der Rückführkanal einen im Wesentlichen rechteckigen Querschnitt, und die Querschnitte sind im Wesentlichen parallel zueinander ausgerichtet.

Nach einer weiteren bevorzugten Ausführungsform ist die Form des vergrößerten Querschnitts im Wesentlichen keilförmig. Auch im Falle einer keilförmigen Ausgestaltung der Querschnittsvergrößerung ist es möglich, die erfindungsgemäß notwendigen Effekte bereitzustellen. Insbesondere am äußeren Randbereich der Querschnittsvergrößerung, wo aufgrund der Keilform ein spitzer Winkel existiert, ist die Kapillaraszension entsprechend groß, so dass die erfindungsgemäß vorgesehene Trennung der beiden Fluide möglich ist.

Nach einer weiteren bevorzugten Ausführungsform ist der Rückführkanal im Wesentlichen symmetrisch zwischen den beiden senkrecht zu einer Haupt-Betrachtungsrichtung angeordneten Wandungen des Verbindungskanals positioniert. Die Haupt-Betrachtungsrichtung ist dabei wiederum die Richtung, aus welcher ein Betrachter auf das Bildkompartiment blickt, um dessen Inhalt möglichst großflächig wahrnehmen zu können. Dementsprechend verlaufen die beiden betreffenden Wandungen im Wesentlichen parallel zu dieser Blickrichtung. Die Position des Rückführkanals ist dann so bemessen, dass dieser im Wesentlichen im mittleren Bereich des Verbindungskanals angeordnet ist, dass also der Abstand der einem Betrachter zugewandten Begrenzungsfläche des Verbindungskanals zu einer dem selben Betrachter zugewandten Begrenzungsfläche des Rückführkanals im Wesentlichen gerade dem Abstand entspricht, den die entsprechenden dem Betrachter jeweils abgewandten Seiten der entsprechenden Kanäle aufweisen.

Besonders bevorzugt ist ein weiterer Rückführkanal vorhanden, der dadurch gebildet wird, dass der erste Rückführkanal an einer Ebene gespiegelt wird, welche parallel zur Blickrichtung eines Betrachters verläuft und außerdem den Verbindungskanal entlang seiner Länge in zwei gleichgroße Hälften teilt. Dementsprechend besitzt besonders bevorzugt jeder Rückführkanal einen an der beschriebenen Ebene gespiegelten Partner.

Nach einer anderen bevorzugten Ausführungsform ist es vorgesehen, dass der mindestens eine Rückführkanal im Wesentlichen an eine der zwischen den beiden senkrecht zu einer Haupt-Betrachtungsrichtung angeordneten Wandungen des Verbindungskanals angeordnet ist. Das bedeutet, dass sich die Position des Rückführkanals entweder direkt an der einem Betrachter zugewandten Begrenzungsfläche des Verbindungskanals liegt, oder gerade mit der Position einer einem Betrachter abgewandten Begrenzungsfläche des Verbindungskanals zusammenfällt.Nach einer anderen bevorzugten Ausführungsform ist je ein Rückführkanal im Wesentlichen an jeweils einer der zwischen den beiden senkrecht zu einer Haupt-Betrachtungsrichtung angeordneten Wandungen des Verbindungskanals angeordnet, und es besteht dazwischen ein Bereich des ursprünglichen Querschnitts. Diese Variante entspricht also einer Kombination der beiden zuvor beschriebenen Varianten. Es existieren demnach genau zwei Rückführkanäle, welche sowohl an der einem Betrachter zugewandten als auch abgewandten Begrenzungsfläche des Verbindungskanals angeordnet sind.

Nach einer bevorzugten Ausführungsform liegen der Verbindungskanal und das Reservoirkompartiment als zwei funktional getrennte Bauelemente vor. Nach einer weiteren Ausführungsform werden sowohl der Verbindungskanal als auch das Reservoirkompartiment durch im Wesentlichen dasselbe Bauelement repräsentiert. Das bedeutet, dass das Volumen des Verbindungskanals zusammen mit dem Volumen des Rückführkanals ausreicht, um den Inhalt des Bildkompartiments zumindest nahezu vollständig aufzunehmen, so dass kein weiterer Raum wie z.B. ein separates Reservoirkompartiment hierzu nötig ist. Diese Variante ist besonders Platz sparend, da auf das separate Bauelement des Reservoirkompartiments vollständig verzichtet werden kann. Es ist lediglich notwendig, dafür Sorge zu tragen, dass es an dem Ende des Verbindungskanals, welches dem Bildkompartiment abgewandt ist, eine Stelle gibt, an welcher der Verbindungskanal in den Rückflusskanal übergehen kann. Dies kann beispielsweise durch 180-Grad-Wendung in Verbindung mit entsprechend weich ausgestalteten Querschnittsübergängen bewerkstelligt werden.

Nach einer anderen bevorzugten Ausführungsform der erfindungsgemäßen Vorrichtung ist bzw. sind der Verbindungs- und/oder der Rückführkanal teilweise oder vollständig mit einer die farbige Flüssigkeit und/oder einer das Trägerfluid abstoßenden und/oder anziehenden Schicht versehen. Insbesondere ist es vorteilhaft, wenn die Bereiche, in denen sich die entsprechenden Flüssigkeiten bevorzugt bewegen sollen, mit entsprechenden, diese Flüssigkeiten anziehenden Beschichtungen belegt sind, und analog dazu ist es ebenso vorteilhaft, alternativ oder ergänzend diejenigen Areale mit die entsprechenden Flüssigkeiten abstoßenden Beschichtungen zu belegen, welche von diesen Flüssigkeiten gerade nicht benetzt werden sollen. Besonders bevorzugt sind solche Areale, welche mit einer abstoßenden Beschichtung versehen werden können, die Grenzbereiche der beiden Querschnitte (Verbindungskanals und Rückführkanals). Die übrigen Areale sind besonders bevorzugt solche, welche mit einer anziehenden Beschichtung versehen werden können.

Nach einer weiteren bevorzugten Ausführungsform können diese Beschichtungen alternativ oder zusätzlich auch in einem oder in beiden Kompartimenten angewandt werden.

Nach einer weiteren bevorzugten Ausführungsform sind der Verbindungs- und der Rückführkanal im Wesentlichen gerade ausgebildet. Im Wesentlichen gerade bedeutet, dass der Strömungspfad einer den Kanal durchströmenden Flüssigkeit linear verläuft und insbesondere nicht um Ecken oder Kanten herum geleitet werden muss. Besonders bevorzugt verlaufen die beiden Kanäle jedoch vollkommen gerade.

Nach einer weiteren bevorzugten Ausführungsform der erfindungsgemäßen Vorrichtung besitzt der Verbindungskanal eine Länge im Bereich von 0,1 bis 5 mm und eine Breite im Bereich von 0,1 bis 5 mm und eine Höhe im Bereich von 0,1 bis 3 mm. Das bedeutet auch, dass die Geometrie des Verbindungskanals entlang seiner Länge im Wesentlichen gleich bleibt.

Nach einer weiteren bevorzugten Ausführungsform der erfindungsgemäßen Vorrichtung besitzt der mindestens eine Rückführkanal eine Breite, welche um 0,1 bis 3 mm größer als die Breite des Verbindungskanals ist, und eine Höhe, welche 1% bis 50% der Höhe des Verbindungskanals beträgt. Nach dieser Diktion entspricht die Breite des Rückführkanals der Breite des Bereichs vergrößerten Querschnitts, welcher jedoch den Bereich ursprünglichen Querschnitts, also die Breite des Verbindungskanals, mit umfasst. Dementsprechend beträgt die Differenz der Breite der beiden Querschnitte gerade die besagten 0,1 bis 3 mm. Die Höhe des Rückführkanals kann erfindungsgemäß im Verhältnis zum Verbindungskanal relativ klein sein, es ist allerdings erfindungsgemäß ebenso möglich, die Höhe des Innenbereich bis in den Bereich der Höhe des Verbindungskanals anwachsen zu lassen. Besonders bevorzugt sollte der durch den Bereich vergrößerten Querschnitts zusätzlich vorhandene Strömungsquerschnitt insbesondere dann in etwa dem des Bereichs ursprünglichen Querschnitts entsprechen, wenn das Trägerfluid kein Gas, sondern eine Flüssigkeit ist, da es in diesem Fall wesentlich ist, wenn der im Rückführkanal fließenden Flüssigkeit kein größer fluidischer Widerstand entgegengesetzt wird als der Flüssigkeit, welche in dem Verbindungskanal strömt. Andernfalls müsste möglicherweise damit zu rechnen sein, dass die im Rückführkanals strömende Flüssigkeit diesen aufgrund des hohen fluidischen Widerstands verlässt, welcher wiederum durch einen zu kleinen Querschnitt des Rückführkanals verursacht wurde. Der Querschnitt des Rückführkanals bezeichnet in diesem Fall ausschließlich diejenige Querschnittsfläche, die durch die erfindungsgemäße Querschnittsverbreiterung zusätzlich zur ursprünglichen Querschnittsfläche (derjenigen des Verbindungskanals) hinzugekommen ist.

Für den Fall, dass diejenige Ausdehnung des Rückführkanals mit dem Begriff "Breite" gemeint ist, welche sowohl senkrecht zur Blickrichtung eines Betrachters als auch senkrecht zur Richtung des Strömungspfades im Rückführkanal verläuft, ist es besonders bevorzugt, wenn sowohl der mindestens eine Rückführkanal als auch das Bild- und das Reservoirkompartiment im Wesentlichen die gleiche Breite besitzen. In jedem Fall ist es bevorzugt, wenn die Breite des mindestens einen Rückführkanals nicht größer als die Breite der entsprechenden Kompartimente ist. Dies gilt sinngemäß auch dann, wenn zwei oder mehr Rückführkanäle vorhanden sind, die, aus Betrachterrichtung gesehen, beiderseits des Verbindungskanals angeordnet sind. In diesem Fall sollen bevorzugt beide Rückführkanäle gemeinsam die Breite der Kompartimente nicht überschreiten.

## Figurenübersicht

Figur 1 zeigt eine Vorrichtung, bei welcher der Rückführkanal nach dem Stand der Technik angeordnet ist.

Figur 2 zeigt eine Ausführungsform der erfindungsgemäßen Vorrichtung.

Figur 3 zeigt die in der Figur 2 dargestellte Ausführungsform der erfindungsgemäßen Vorrichtung in einer Schnittan- sicht entlang der Schnittlinie A.

## Figurenbeschreibung

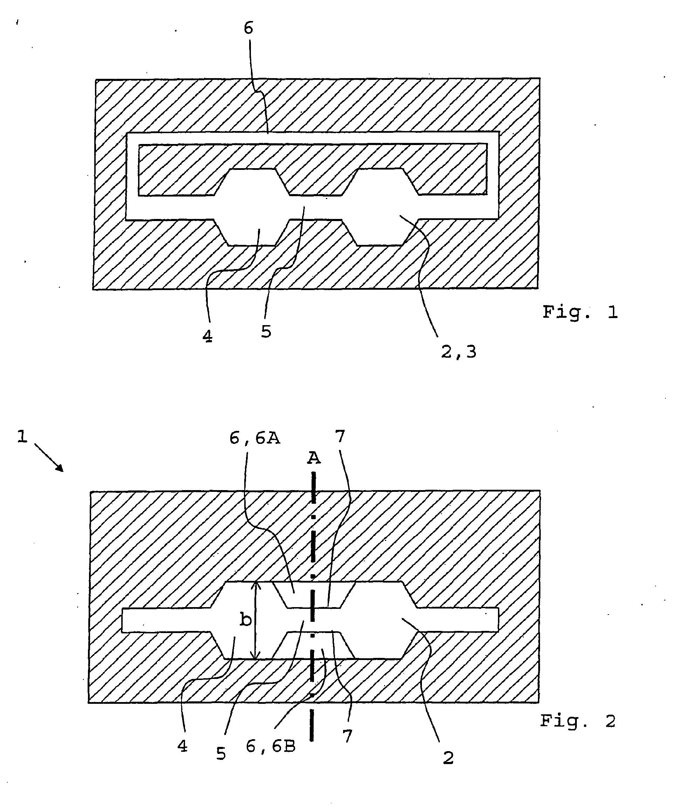

Die **Figur 1** zeigt eine Vorrichtung, bei welcher der Rückführkanal 6 nach dem Stand der Technik angeordnet ist. Dargestellt ist eine Schnittansicht, welche sich aus Blickrichtung eines Betrachters ergibt, welche im Wesentlichen senkrecht auf der Fläche maximaler Ausbreitung des Bildkompartiments 3 ausgerichtet ist. Das Bildkompartiment 3 ist gleichzeitig auch der Bildpunkt 2. In der Nähe des Bildkompartiments 3 befindet sich das Reservoirkompartiment 4. die beiden Kompartimente 3, 4 sind durch einen Verbindungskanal 5 miteinander verbunden. Nicht dargestellt ist eine zum Transport der ebenfalls nicht dargestellten gefärbten Flüssigkeit notwendige Fluidfördereinrichtung wie z.B. eine Pumpe. Bei einem Transport der gefärbten Flüssigkeit aus dem Bildkompartiment 3 in das Reservoirkompartiment 4 wird im Reservoirkompartiment 4 ursprünglich vorhandenes Fluid (Flüssigkeit oder Gas) aus diesem verdrängt. Da das fluidische System geschlossen ist, muss ein Rückführkanal 6 vorgesehen sein, welcher einen entsprechenden Druck- und Volumenausgleich ermöglicht. Wie aus der Figur 1 unmittelbar ersichtlich, benötigt ein Rückführkanal 6 nach dem Stand der Technik entsprechend viel Platz, es sei denn, er verläuft nach einer nicht dargestellten Variante in einer Ebene, welche sich unterhalb der beiden dargestellten Kompartimente 3, 4 befindet. Eine derartige Anordnung würde jedoch nur mit einem hohen konstruktiven Aufwand realisierbar sein und ist deshalb zu vermeiden.

Die **Figur 2** zeigt daher eine Ausführungsform der erfindungsgemäßen Vorrichtung 1. Auch hier ist die Darstellung als Schnitt ähnlich der Figur 1 ausgeführt. Die Vorrichtung 1 umfasst wiederum einen Bildpunkt 2, der als Bildkompartiment 3 ausgeführt ist. Auch umfasst sie ein Reservoirkompartiment 4, welches mit dem Bildkompartiment 3 durch einen Verbindungskanal 5 fluidisch verbunden ist. Die Figur zeigt außerdem zwei Rückführkanäle 6A, 6B, welche beiderseits des Verbindungskanals 5 und im Wesentlichen symmetrisch zu diesem angeordnet sind. Die Rückführkanäle 6A, 6B werden dadurch gebildet, dass der Verbindungskanal 5, welcher einen Bereich ursprünglichen Querschnitts 5 darstellt, eine Verbreiterung erfährt, so dass sich ein Bereich vergrößerten Querschnitts 6 ergibt.

Die Verbreiterung des Bereichs ursprünglichen Querschnitts 5 erfolgt dabei parallel zu den senkrecht angeordneten Wandungen 7, die den Verbindungskanal 5 seitlich begrenzen und außerdem parallel zur Blickrichtung eines Betrachters verlaufen.

Das Maß b, welches die Breite der Kompartimente beschreibt, ist in der dargestellten Variante gleichzeitig das Maß, welches die Breite des Bereiches vergrößerten Querschnitts bezeichnet. Eine Identität dieser beiden Breiten ist erfindungsgemäß besonders bevorzugt.

Die Figur 2 zeigt außerdem eine Schnittlinie A, deren zugehörige Schnittansicht in der nächsten Figur dargestellt ist.

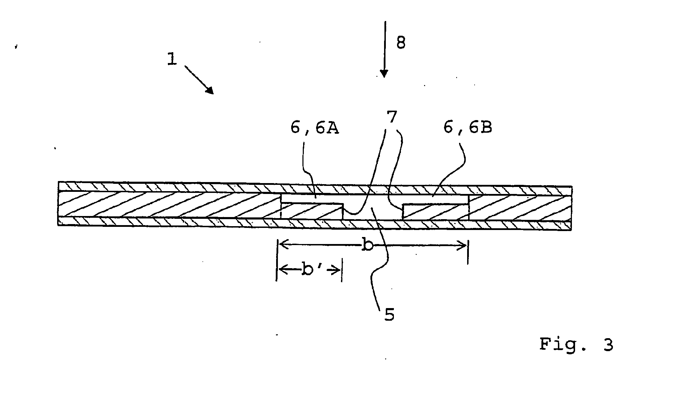

Dementsprechend zeigt **Figur 3** die in der Figur 2 dargestellte Ausführungsform der erfindungsgemäßen Vorrichtung 1 in einer Schnittansicht entlang der Schnittlinie A.

Gut erkennbar ist hier der Bereich ursprünglichen Querschnitts 5, welcher den Verbindungskanal darstellt, und der Bereich vergrößerten Querschnitts 6, der sich aufgrund der Symmetrie in einen Bereich 6A und 6B aufteilt. Die seitlichen Wandungen dieser beiden Bereiche verlaufen parallel zu den seitlichen und senkrecht angeordneten Wandungen 7 des Verbindungskanals 5 und gleichzeitig parallel zu einer Haupt-Betrachtungsrichtung 8 eines nicht dargestellten Betrachters. Die Breite b des Bereichs vergrößerten Querschnitts 6 erstreckt sich dabei über die nicht näher bezeichnete Breite des Bereichs ursprünglichen Querschnitts hinweg. Es sei jedoch hinzugefügt, dass insbesondere zur Berechnung der kapillar-fluidischen Eigenschaften der jeweiligen Rückführkanäle 6A, 6B die Breite des Rückführkanals b' relevant ist, welche sich lediglich auf den entsprechenden Querschnittsbereich 6A, 6B bezieht.

In der dargestellten Variante verläuft der Querschnittsübergang zwischen den Bereich ursprünglichen Querschnitts und den Bereichen vergrößerten Querschnitts im Wesentlichen rechtwinklig. Abrundungen sind nicht dargestellt, können erfindungsgemäß jedoch in bestimmten Fällen tolerierbar sein.

In der dargestellten Ausführungsform deuten die Bereiche jeweils unterschiedlich ausgerichteter Schraffur auch unterschiedliche Materialien bzw. Bauelemente an. Es ist jedoch erfindungsgemäß ebenso möglich, die erfindungsgemäße Vorrichtung aus zwei- oder gar einstückigen Komponenten herzustellen.

**Bezugszeichenliste und Abkürzungen**

| 1 | Vorrichtung |
|---|---|
| 2 | Bildpunkt |
| 3 | Bild-Kompartiment |
| 4 | Reservoir-Kompartiment |
| 5 | Verbindungskanal; Bereich ursprünglichen Querschnitts |
| 6 | Rückführkanal; Bereich vergrößerten Querschnitts |
| 6A | erster Rückführkanal |
| 6B | zweiter Rückführkanal |
| 7 | senkrecht angeordnete Wandungen |
| 8 | Haupt-Betrachtungsrichtung |
| A | Schnittkante |
| b | Breite |
| b' | Breite des Rückführkanals |

**Patentansprüche**

1. Anzeigevorrichtung, mit mindestens einem Bildpunkt (2), der aufweist:

- eine gefärbte Flüssigkeit und ein Trägerfluid, die nicht miteinander mischbar sind,
- ein Bildkompartiment (3), in welchem die gefärbte Flüssigkeit teilweise oder ganz aufnehmbar ist und dessen Inhalt für einen Betrachter sichtbar ist,
- ein Reservoirkompartiment (4), in welchem die gefärbte Flüssigkeit teilweise oder ganz aufnehmbar ist und dessen Inhalt für einen Betrachter nicht sichtbar ist,
- einen Verbindungskanal (5), der das Bildkompartiment (3) und das Reservoirkompartiment (4) fluidisch miteinander verbindet,

- mindestens ein Rückführkanal (6), welcher das Bildkompartiment (3) und das Reservoir-Kompartiment (4) fluidisch miteinander verbindet,

**dadurch gekennzeichnet, dass** der Verbindungskanal (5) und der Rückführkanal (6) als ein einheitlicher Kanal ausgebildet sind, welcher im Querschnitt senkrecht zu einer Fluidströmungsrichtung auf seiner gesamten Länge und entlang einer Dimension des Querschnitts einen scharfkantigen Kanalbreitenübergang aufweist, der den Kanalquerschnitt in einen ersten Bereich mit einer ersten Breite (b) und einen zweiten Bereich mit einer im Vergleich zu der ersten Breite (b) geringeren zweiten Breite (b') unter Ausbildung eines kapillaren Sprungs unterteilt, so daß Flüssigkeil, die sich im Rodfürkaml befindet nicht in den Venbindungskannl gelanges kann.

2. Vorrichtung nach Anspruch 1, **dadurch gekennzeichnet, dass** der Kanalbreitenübergang entlang im Wesentlichen senkrechter Wandungen (7) verläuft.

3. Vorrichtung (1) nach Anspruch 1 oder 2, **dadurch gekennzeichnet, dass** der Kanalbreitenübergang im Wesentlichen als rechter Winkel ausgebildet ist.

4. Vorrichtung nach Anspruch 1 oder 2, **dadurch gekennzeichnet, dass** die Breite des Verbindungskanals (5) im Wesentlichen keilförmig in die Breite des Rückführkanals (6) übergeht.

5. Vorrichtung (1) nach einem der Ansprüche 1 bis 4, **dadurch gekennzeichnet, dass** der Rückführkanal (6) im Wesentlichen symmetrisch zwischen den beiden senkrecht zu einer Haupt-Betrachtungsrichtung (8) angeordneten Wandungen (7) des Verbindungskanals (5) angeordnet ist.

6. Vorrichtung (1) nach einem der Ansprüche 1 bis 4, **dadurch gekennzeichnet, dass** der mindestens eine Rückführkanal (6) im wesentlichen an eine der zwischen den beiden senkrecht zu einer Hauptbetrachtungsrichtung (8) angeordneten wandungen (7) des verbindungskanals (5) angeordnet ist.

7. Vorrichtung (1) nach einem der Ansprüche 1 bis 4, **dadurch gekennzeichnet, dass** je ein Rückführkanal (6A, 6B) im Wesentlichen an jeweils einer der zwischen den beiden senkrecht zu einer Haupt-Betrachtungsrichtung (8) angeordneten Wandungen (7) des verbindungskanals (5) angeordnet ist und dazwischen ein Bereich des ursprünglichen Querschnitts (5) besteht.

8. Vorrichtung (1) nach einem der Ansprüche 1 bis 7, **dadurch gekennzeichnet, dass** der Verbindungs- und/oder der Rückführkanal (5, 6) teilweise oder vollständig mit einer die farbige Flüssigkeit und/oder einer das Trägerfluid abstoßenden und/oder anziehenden Schicht versehen ist bzw. sind.

9. Vorrichtung (1) nach einem der Ansprüche 1 bis 8, **dadurch gekennzeichnet, dass** der Verbindungs- und der Rückführkanal (5, 6) im Wesentlichen gerade ausgebildet sind.

10. Vorrichtung (1) nach einem der Ansprüche 1 bis 9, bei welcher der Verbindungskanal (5) eine Länge im Bereich von 0,1 bis 5 mm und eine Breite im Bereich von 0,1 bis 5 mm und eine Höhe im Bereich von 0,1 bis 3 mm besitzt.

11. Vorrichtung (1) nach einem der Ansprüche 1 bis 10, bei welcher der mindestens eine Rückführkanal (6) eine Breite besitzt, welche um 0,1 bis 3 mm größer als die Breite des Verbindungskanals (5) ist, und eine Höhe besitzt, welche 1% bis 50% der Höhe des Verbindungskanals (5) beträgt.

12. Vorrichtung (1) nach einem der Ansprüche 1 bis 11, bei welcher sowohl der mindestens eine Rückführkanal (6) als auch das Bild- und das Reservoir-Kompartiment (3, 4) im Wesentlichen die gleiche Breite b besitzen.

## Claims

1. A display device having at least one pixel (2), comprising:

   - a coloured fluid and a carrier fluid that are immiscible,
   - an image compartment (3) in which said coloured liquid is receivable in part or entirely and the content of which is visible to an observer,
   - a reservoir compartment (4) in which the coloured fluid is receivable in part or entirely and the content of which is not visible to an observer,
   - a connecting duct (5) that fluidically couples said image compartment (3) with said reservoir compartment (4),
   - at least one return duct (6) which fluidically couples said image compartment (3) and said reservoir compartment (4),

   **characterized in that** said connecting duct (5) and said return duct (6) are formed as a unitary duct, having in a cross section in a direction perpendicular to a direction of fluid flow along its entire length and along a dimension of said cross section a sharpedged duct width transition that divides said duct cross section in a first area having a first width (b) and a second area having a second width (b') that it less than that first width (b) thereby forming a capillary leap so that liquid that is contained in said return duct does not reach into said connecting duct.

2. The device according to claim 1, **characterized in that** said duct width transition runs along essentially vertical walls (7).

3. The device according to claims 1 or 2, **characterized in that** said duct width transition is realized essentially in the form of a right angle.

4. The device according to claims 1 or 2, **characterized in that** said width of said connecting duct transitions essentially in a wedge-shape into the width of the return duct.

5. The device according to one of claims 1 to 4, **characterized in that** said return duct (6) is located essentially symmetrically between the two walls (7) of the connecting duct which are oriented vertically with reference to a main direction of observation (8).

6. The device according to one of claims 1 to 4, **characterized in that** said at least one return duct (6) is located essentially on one of the two walls (7) of the connecting duct (5) which are oriented vertically with reference to a main direction of observation (8).

7. The device according to one of claims 1 to 4, **characterized in that** the return duct (6A, 6B) is located essentially on each of the walls (7) of the connecting duct (5) which are oriented perpendicular to a main observation direction (8) and an area with the original cross section (5) exists between them.

8. The device according to one of claims 1 to 7, **characterized in that** part or all of connecting duct and/or the return duct (6) is or are provided with a coating that repels and/or attracts the coloured fluid and/or the carrier fluid.

9. The device according to one of claims 1 to 8, **characterized in that** the connecting duct (5) and the return duct (6) are realized so that they are essentially linear.

10. The device according to one of claims 1 to 9, **characterized in that** the connecting duct (5) has a length in the range of 0.1 to 5 mm and a width in the range of 0.1 to 5 mm and a height in the range of 0.1 to 3 mm.

11. The device according to one of claims 1 to 10, wherein the at least one return duct (6) has a width which is 0.1 to 3 mm greater than the width of the connecting duct (5), and a height which is 1% to 50% greater than the height of the connecting duct (5).

**12.** The device according to one of claims 1 to 11, wherein both the at least on return duct (6) and the image compartment (3) and reservoir compartment (4) have essentially the same width b.

**Revendications**

**1.** Dispositif d'affichage, comprenant au moins un point d'image (2), qui présente :

- un liquide teinté et un fluide porteur, qui ne peuvent pas être mélangés l'un à l'autre,
- un compartiment image (3), dans lequel le liquide teinté peut être réceptionné partiellement ou complètement et dont le contenu est visible pour un observateur,
- un compartiment réservoir (4), dans lequel le liquide teinté peut être réceptionné partiellement ou complètement et dont le contenu n'est pas visible pour un observateur,
- un canal de liaison (5), qui relie fluidiquement le compartiment image (3) et le compartiment réservoir (4),
- au moins un canal retour (6), lequel relie fluidiquement le compartiment image (3) et le compartiment réservoir (4),
**caractérisé en ce que** le canal de liaison (5) et le canal de recyclage (6) sont conçus comme un canal homogène, qui présente en section, perpendiculairement à un sens d'écoulement de fluide, sur l'ensemble de sa longueur et le long d'une dimension de la section, une transition de largeur de canal à arêtes vives, qui subdivise la section du canal en une première zone d'avec une première largeur (b) et une seconde zone avec une seconde largeur (b') plus faible par rapport à la première largeur (b) en formant un saut capillaire, de sorte que du liquide, qui se trouve dans le canal de recyclage, ne peut pas arriver dans le canal de liaison.

**2.** Dispositif selon la revendication 1, **caractérisé en ce que** la transition de largeur de canal s'étend le long de parois (7) principalement verticales.

**3.** Dispositif (1) selon la revendication 1 ou 2, **caractérisé en ce que** la transition de largeur de canal est conçue principalement sous forme d'angle droit.

**4.** Dispositif selon la revendication 1 ou 2, **caractérisé en ce que** la largeur du canal de liaison (5) fait place principalement en forme de clavette à la largeur du canal de recyclage (6).

**5.** Dispositif (1) selon l'une des revendications 1 à 4, **caractérisé en ce que** le canal de recyclage (6) est disposé de façon principalement symétrique entre les deux parois (7) disposées perpendiculairement à une direction d'observation principale (8), du canal de liaison (5).

**6.** Dispositif (1) selon l'une des revendications 1 à 4, **caractérisé en ce que** le au moins un canal de recyclage (6) est disposé principalement sur l'une des parois (7), disposées entre les deux parois disposées perpendiculairement à une direction d'observation principale (8), du canal de liaison (5).

**7.** Dispositif (1) selon l'une des revendications 1 à 4, **caractérisé en ce qu'**à chaque fois un canal de recyclage (6A, 6B) est disposé essentiellement sur respectivement une des parois (7), disposées entre les deux parois disposées perpendiculairement à une direction d'observation principale (8), du canal de liaison (15) et une zone de la section (5) initiale est intercalée.

**8.** Dispositif (1) selon l'une des revendications 1 à 7, **caractérisé en ce que** le canal de liaison et/ou le canal de recyclage (5, 6) est/sont doté(s) partiellement ou complètement d'une couche repoussant et/ou attirant le liquide de couleur et/ou le fluide porteur.

**9.** Dispositif (1) selon l'une des revendications 1 à 8, **caractérisé en ce que** le canal de liaison et le canal de recyclage (5, 6) sont conçus sensiblement droits.

**10.** Dispositif (1) selon l'une des revendications 1 à 9, sur lequel le canal de liaison (5) présente une longueur dans la plage de 0,1 à 5 mm et une largeur dans la plage de 0,1 à 5 mm et une hauteur dans la plage de 0,1 à 3 mm.

**11.** Dispositif (1) selon l'une des revendications 1 à 10, sur lequel le au moins un canal de recyclage (6) présente une largeur qui est supérieure de 0,1 à 3 mm à la largeur du canal de liaison (5), et présente une hauteur qui est supérieure de 1 % à 50 % de la hauteur du canal de liaison (5).

**12.** Dispositif (1) selon l'une des revendications 1 à 11, sur lequel aussi bien le au moins un canal de recyclage (6) que le compartiment image et le compartiment réservoir (3, 4) présentent sensiblement la même largeur b.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005249641 A
- US 2007025875 A1

**In der Beschreibung aufgeführte Nicht-Patentliteratur**

- **L. Riegger et al.** MICROFLUIDICS ON A CONVENTIONAL, 10-$ CDROM DRTVE: ALL-IN-ONE DETERMINATION OF THE HEMATOCRIT. *The 10th International Conference on Miniaturized Systems for Chemistry and Life Sciences (μTAS2006),* 05. November 2006
- **K. Blankenbach et al.** D-111: Novel Electrowetting Display. *SID Symposium Digest of Technical Papers,* Mai 2007, vol. 38 (1), 618-621